# EUROPÄISCHE PATENTSCHRIFT

(11) **EP 1 467 877 B1**
(45) Veröffentlichungstag und Bekanntmachung des Hinweises auf die Patenterteilung: **19.04.2006**
(21) Anmeldenummer: 03731622.1
(22) Anmeldetag: 17.01.2003
(51) Int. Cl.: B60C 23/04

(54) **VERFAHREN ZUM ÜBERWACHEN DES DRUCKS IN LUFTREIFEN AN FAHRZEUGEN**
METHOD FOR MONITORING THE TIRE PRESSURE ON VEHICLES
PROCEDE DE CONTROLE DE LA PRESSION DES PNEUS SUR UN VEHICULE

(30) Priorität: 22.01.2002 DE 10203335; 18.04.2002 DE 10217239
(43) Veröffentlichungstag der Anmeldung: 20.10.2004
(73) Patentinhaber: Beru Aktiengesellschaft, 71636 Ludwigsburg (DE)
(72) Erfinder: SCHULZE, Gunter, 75228 Ispringen (DE); FRANK, Michael, 75015 Bretten (US)
(74) Vertreter: Twelmeier, Ulrich
(86) Internationale Anmeldenummer: PCT/EP2003/000439
(87) Internationale Veröffentlichungsnummer: WO 2003/061995

(56) Entgegenhaltungen:
- DE-A- 19 856 860
- DE-A- 19 939 936
- US-B1- 6 271 748

## Beschreibung

Die Erfindung betrifft ein Verfahren zum Überwachen und drahtlosen Signalisieren eines Drucks oder einer Druckänderung in Luftreifen von Rädem an Fahrzeugen.

Ein derartiges Verfahren sowie eine entsprechende Vorrichtung sind aus der DE 198 56 860 A1 bekannt. Die dort offenbarte Vorrichtung hat eine am Ventilfuß angeordnete Radelektronik, welche im Inneren des Luftreifens liegt und dem Druck im Luftreifen ausgesetzt ist. Die Radelektronik hat eine Batterie als Stromquelle, einen Drucksensor, welcher den im Luftreifen herrschenden Druck mißt, eine elektronische Auswerteschaltung, welche die vom Drucksensor gelieferten Druckmeßsignale auswertet, und einen Sender, welcher von der Auswerteschaltung gesteuert wird und Signale, welche eine aus der Druckmessung gewonnene Information über den Druck im Reifen enthalten, an ein im oder am Fahrzeug angebrachtes Empfangsgerät übermittelt. Als Drucksensoren sind Absolutdrucksensoren auf Halbleiterbasis gebräuchlich, welche ein dem aktuellen Reifendruck entsprechendes elektrisches Ausgangssignal liefern. Das im oder am Fahrzeug angebrachte Empfangsgerät ist mit einer Anzeigeeinrichtung verbunden, welche einem Fahrer des Fahrzeugs einen gefährlichen Druckabfall und/oder andere Informationen über den Zustand des Reifens signalisiert.

Bei einer einmal eingebauten Radelektronik ist ein Batteriewechsel nicht oder nur mit sehr großem Aufwand möglich. Um den Energieverbrauch der Radelektronik gering zu halten ist bei der DE 198 56 860 A1 vorgesehen, daß die Radelektronik Reifendruckdaten in Zeitabständen aussendet, welche von der Fahrzeuggeschwindigkeit abhängen. Bei einer Geschwindigkeit von über 25 km/h werden Reifendruckdaten beispielsweise in Zeitabständen von 54 Sekunden gesendet, während bei langsamerer Fahrt oder bei Stillstand des Fahrzeugs nur noch im Abstand von beispielsweise 15 Minuten gesendet wird. Diese Anpassung der Senderate an die Fahrzeuggeschwindigkeit erlaubt eine Batterielebensdauer von ca. sieben Jahren.

Um die Batterielebensdauer weiter zu erhöhen, lehrt die DE 199 39 936 A1, die Radelektronik mit einem Empfänger zu versehen, mit welchem sie ein Abfragesignal von einem im oder am Fahrzeug vorgesehenen Abfragesender empfangen kann. Beim Empfangen eines Abfragesignals wird dann jedesmal das Senden von Reifendruckdaten veranlaßt. Auf diese Art und Weise erfolgt das energieintensive Senden von Reifendruckdaten nur noch dann, wenn Daten über den Reifendruck auch tatsächlich benötigt werden. Insbesondere kann auf diese Art und Weise auf das Senden von Druckdaten bei einem geparkten Fahrzeug verzichtet werden. Nachteilig an dieser Lösung ist, daß bei einem Defekt des Abfragesenders keine Reifendrucküberwachung mehr erfolgt.

**Aufgabe** der Erfindung ist es, einen Weg aufzuzeigen, wie bei langer Batterielebensdauer kostengünstig eine zuverlässigere Reifendrucküberwachung erreicht werden kann,

Diese Aufgabe wird durch ein Verfahren mit den im Anspruch 1 angegeben Merkmalen gelöst. Vorteilhafte Weiterbildungen der Erfindung sind Gegenstand der Unteransprüche.

Das erfindungsgemäße Verfahren nutzt die Vorteile einer Reifendrucküberwachung mit einem Abfragesender gemäß der Lehre der DE 199 39 936 A1, jedoch ohne die dort vorhandenen Nachteile in Kauf zu nehmen. Solange der Abfragesender intakt ist, wird die Radelektronik durch Abfragesignale zum Aussenden von Informationen über den Druck oder eine Druckänderung im Reifen veranlaßt. Bleiben jedoch - aus welchem Grund auch immer - die Abfragesignale aus, so geht die Radelektronik nach einer vorgegebenen Zeitspanne in einen zweiten Betriebszustand über, in welchem mit einer intern gebildeten Senderate gesendet wird. Diese Senderate kann fest vorgegeben sein oder auch intern unter Verwendung von in der Radelektronik gemessenen physikalischen Grössen veränderlich gebildet werden, z. B. abhängig vom Druck oder von der Druckänderungsgeschwindigkeit oder abhängig von der Fahrzeuggeschwindigkeit (Drehzahl des Rades).

**Es ist ein besonderer Vorzug, daß das erfindungsgemäßes Verfahren zwar die Vorteile eines Abfragesenders für einen besonders energiesparenden Betrieb nutzt, jedoch für eine zuverlässige Reifendrucküberwachung nicht auf einen solchen Abfragesender angewiesen ist.** Vorteilhaft ist daher auch bei einem Defekt eines Abfragesenders immer noch eine lückenlose Reifendrucküberwachung möglich. Insbesondere läßt sich eine Radelektronik mit dem erfindungsgemäßen Verfahren, ohne irgendwelche Änderungen oder Einstellungen vornehmen zu müssen, sowohl an Fahrzeugen mit Abfragesender, als auch an Fahrzeugen ohne Abfragesender verwenden. Während bislang für Fahrzeuge mit Abfragesender gemäß DE 199 39 936 A1 und Fahrzeuge ohne Abfragesender verschiedene Radelektroniken benötigt werden, genügt es nun, für beide Einsatzfälle nur eine einzige Ausführungsform einer Radelektronik zu fertigen. Ein Umstellen des Produktionsprozesses auf verschiedene Typen von Radelektroniken kann daher künftig entfallen. Statt dessen braucht nur noch eine einzige Ausführungsform einer Radelektronik gefertigt werden, und das kann in höheren Stückzahlen geschehen. Dies führt zu geringeren Produktionskosten und einer vereinfachten Logistik und Lagerhaltung. Vorteilhaft müssen insbesondere auch in Werkstätten nicht mehr verschiedene Typen von Radelektroniken auf Vorrat gehalten werden, sondern nur noch eine einzige, welche zu allen Fahrzeugtypen paßt, ob diese nun einen Abfragesender haben oder nicht, und daher sozusagen blind eingebaut werden kann.

Bevorzugt wird in dem ersten Betriebszustand der Druck oder die Druckänderung nach einem internen Programm wiederholt gemessen. Zwar ist es an sich ausreichend, auf ein Abfragesignal hin nur eine einzige Druck- oder Druckänderungsmessung durchzuführen, doch läßt sich bei wiederholten Messungen beispielsweise durch Mittelung über mehrere Meßwerte eine zuverlässigere Information über den Druck oder die Druckänderung gewinnen. Bevorzugt erfolgen die Messungen in dem ersten Betriebszustand unabhängig von dem Abfragesignal, beispielsweise stets in einem festen Takt von z.B. 1 s.. Diese Maßnahme hat den Vorteil, daß die Radelektronik stets über eine aktuelle Information über den Druck oder die Druckänderung verfügt und unmittelbar im Anschluß an den Empfang eines Abfragesignals senden kann. Bevorzugt werden für den ersten und den zweiten Betriebszustand übereinstimmende Meßraten benutzt. Der mit dem Messen des Drucks oder der Druckänderung verbundene Energieaufwand ist wesentlich geringer als jener Energieaufwand, welcher mit dem Senden verbunden ist. Verschiedene Meßraten für den ersten und den zweiten Betriebszustand sind aber durchaus möglich.

Eine vorteilhafte Weiterbildung der Erfindung sieht vor, daß das erste Steuersignal vom Vorgang des Entriegelns des Fahrzeugs abgeleitet wird. Bei einem abgestellten Fahrzeug besteht keine Notwendigkeit für eine ständige Überwachung des Reifendrucks Es genügt, wenn bei dem nächsten Fahrtbeginn Informationen über den Zustand des Reifens signalisiert werden. Wird die Radelektronik dann durch ein vom Vorgang des Entriegelns des Fahrzeugs abgeleitetes erstes Steuersignal in den ersten Betriebszustand versetzt, so läßt sich in jener Zeitspanne, welche üblicherweise zwischen dem Entriegeln des Fahrzeugs und dem Losfahren vergeht, durch Abfragen der Radelektroniken bereits eine Information über den Zustand der Reifen gewinnen. Vorzugsweise wird als erstes Steuersignal das Signal eines Funkschlüssels oder eines davon abgeleiteten Signales benutzt.

Eine vorteilhafte Weiterbildung der Erfindung sieht vor, daß in der Radelektronik ein ursächlich von der Raddrehung abgeleitetes elektrisches Signal gewonnen und im zweiten Betriebszustand zur Steuerung der Senderate benutzt wird. Bei hoher Geschwindigkeit ist ein Druckverlust in einem Fahrzeugreifen viel gefährlicher als bei niedrigerer Geschwindigkeit. Beim Parken oder langsamer Fahrt können daher die Sendeintervalle wesentlich länger sein, als bei schneller Fahrt, so daß sich auf diese Art und Weise Sendeenergie einsparen läßt. Bevorzugt wird bei Überschreiten einer Mindestgeschwindigkeit in Zeitintervallen T0 gesendet, welche beispielsweise 54 Sekunden betragen können, und bei Erreichen einer Mindestgeschwindigkeit oder bei Stillstand des Fahrzeuges in größeren Zeitintervallen gesendet, welche beispielsweise 15 Minuten betragen können. Vorzugsweise sind diese beiden Mindestgeschwindigkeiten gleich, sie können jedoch auch durch eine Hysteres auseinanderfallen. Bevorzugt werden die von der Raddrehung abgeleiteten Signale zum Verändern der Zeitspanne T0 benutzt. Beispielsweise läßt sich auf diese Art und Weise die Senderate mit zunehmender Geschwindigkeit erhöhen. Von der Raddrehung abgeleitete Signale lassen sich hierfür beispielsweise mittels eines in der Radelektronik vorgesehenen Fliehkraftsensors gewinnen, dessen Signal durch die Schwerkraft proportional zur Drehzahl des Rades moduliert ist wie in der WO 01/69265 A1 offenbart. Mit geringerem apparativem Aufwand verbunden ist ein auf die Raddrehung ansprechender Schalter, welcher lediglich das Erreichen einer Mindestgeschwindigkeit detektiert und dann ein Senden in von T1 auf T0 verkürzten Zeitabständen veranlaßt.

Eine weitere vorteilhafte Weiterbildung der Erfindung sieht vor, daß die Druck- bzw. Druckänderungssignale in der Radelektronik ausgewertet werden und im zweiten Betriebszustand die Senderate in Abhängigkeit von der Geschwindigkeit einer Druckänderung eingestellt wird. Wird von der Radelektronik ein schneller Druckabfall festgestellt, bei welchem innerhalb einer vorgegebenen Zeitspanne ein vorgegebener Schwellenwert der Druckänderung von z.B. 0,2 bar/min. überschritten wird, so wird die Senderate erhöht. Diese Maßnahme hat den Vorteil, daß bei einem langsamen, schleichenden Druckabfall oder bei einem konstant bleibenden Druck die Senderate vergleichsweise niedriger sein darf, ohne daß dies zu einem Verlust an Sicherheit führt, da ein gefährlicher schneller Druckabfall einem Fahrer des Fahrzeugs trotzdem sofort angezeigt werden kann. Bevorzugt sendet die Radelektronik im ersten Betriebszustand beim Überschreiten eines vorgegebenen Schwellenwertes der Geschwindigkeit einer Druckänderung sendet, ohne auf ein Abfragesignal zu warten. Das Senden braucht nicht unbedingt sofort im Anschluß an den ersten Meßwert zu erfolgen, welcher einen schnellen Druckverlust anzeigt. Zur Erhöhung der Zuverlässigkeit ist es vielmehr vorteilhaft, hierfür über mehrere Meßwerte zu mitteln, wozu bevorzugte die Meßrate erhöht wird, beispielsweise von 1 Messung pro 3s auf 1 Messung pro 0,8s. Vorteilhaft kann so ein gefährlicher schneller Druckabfall einem Fahrer des Fahrzeugs im ersten ebenso wie im zweiten Betriebszustand unverzüglich signalisiert werden. Hierfür genügt es an sich, wenn die Radelektronik bei Feststellen eines schnellen Druckabfalls ein einziges Mal sendet, ohne auf ein Abfragesignal zu warten. Bevorzugt sendet die Radelektronik jedoch bei einem schnellen Druckabfall im ersten Betriebszustand ebenso wie im zweiten Betriebszustand mit einer schnellen Senderate.

Eine weitere vorteilhafte Weiterbildung der Erfindung sieht vor, daß die Radelektronik durch ein drittes, drahtlos von außerhalb der Radelektronik übermitteltes Steuersignal in einen dritten Betriebszustand versetzt wird, in welchem sie überhaupt nicht mehr sendet, bis sie den dritten Betriebszustand entweder durch Empfang des ersten Steuersignals oder durch Erreichen der Mindestgeschwindigkeit des Fahrzeugs wieder verläßt und in den ersten oder den zweiten Betriebszustand übergeht. Bevorzugt wird in dem dritten Betriebszustand kein Druck und auch keine Druckänderung mehr gemessen. Dieser dritte Betriebszustand ist demzufolge durch einen extrem geringen Energieverbrauch gekennzeichnet. Er eignet sich deshalb vor allem zur Lagerung der Radelektronik, beispielsweise in Werkstätten. Für eine energiesparende Lagerung läßt sich die Radelektronik beispielsweise mittels eines Handgerätes, welches das dritte Steuersignal aussendet, in den besonders energiesparenden dritten Zustand versetzen. Darüberhinaus ist der dritte Betriebszustand aber auch für geparkte Fahrzeuge geeignet. Das dritte Steuersignal läßt sich beispielsweise vorteilhaft vom Verriegeln des Fahrzeugs ableiten. Aus diesem energiesparenden dritten Zustand wechselt die Radelektronik eines geparkten Fahrzeuges dann aufgrund des ersten Steuersignales, welches bevorzugt vom Entriegeln des Fahrzeugs abgeleitet wird, oder - falls das erste Steuersignal ausbleibt - bei Erreichen der Mindestgeschwindigkeit, welche wie vorstehend beschrieben beispielsweise mittels eines Rollschalters erfaßt wird, in den ersten oder zweiten Betriebszustand. Ob die Radelektronik bei Überschreiten der Mindestgeschwindigkeit vom dritten Betriebszustand in den ersten oder in den zweiten Betriebszustand wechselt, spielt an sich keine große Rolle, da die Radelektronik ohnehin bei Ausbleiben eines Abfragesignals aus dem ersten Betriebszustand in den zweiten Betriebszustand fällt.

Weitere Einzelheiten und Vorteile der Erfindung werden anhand eines Ausführungsbeispiels unter Bezugnahme auf die beigefügten Abbildungen erläutert.

Die Figuren 1 bis 3 zeigen Ausschnitte aus einem Flußdiagramm des erfindungsgemäßen Verfahrens.
- Figur 1: zeigt einen Ausschnitt mit dem Lagerzustand und dem dritten Betriebszustand,
- Figur 2: zeigt einen Ausschnit mit dem zweiten Betriebszustand, und
- Figur 3: zeigt einen Ausschnitt mit dem ersten Betriebszustand.

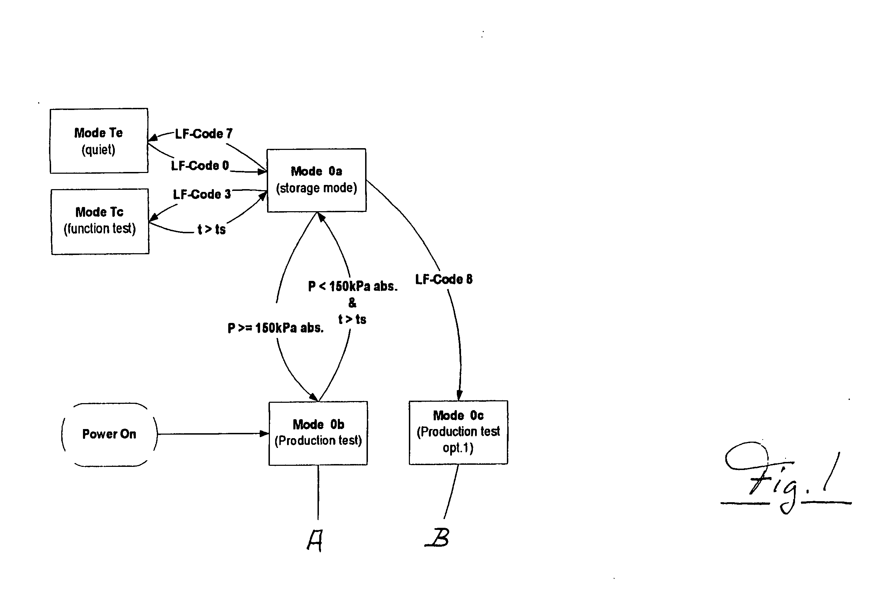

Die in den Figuren 1, 2 und 3 gezeigten Ausschnitte des Flußdiagramms sind dabei so zusammenzusetzen, daß mit gleichen lateinischen Großbuchstaben A, B, C, D, E und F gekennzeichnete Linien aneinander anstoßen.

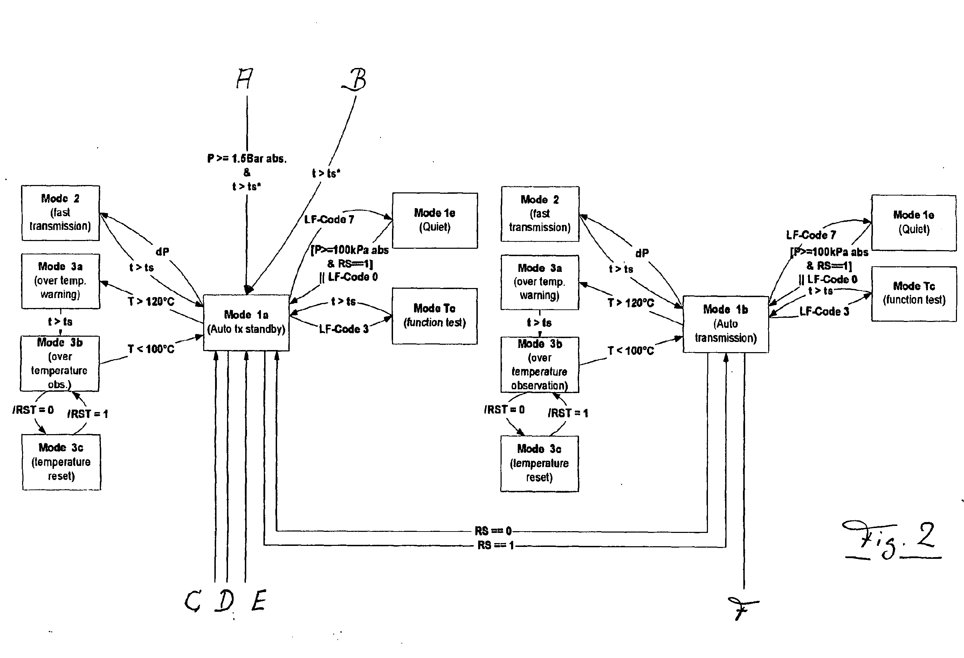

Vor der erstmaligen Betriebnahme befindet sich die Radelektronik in einem Lagerungszustand, welcher in Figur 1 als Mode 0a bezeichnet ist. In diesem Lagerzustand unterbleibt jeglicher Sendebetrieb und es wird lediglich in periodisch wiederkehrenden Zeitabständen der Druck gemessen. Wird im Lagerzustand ein Anstieg des Drucks über einen vorgegebenen Schwellwert, beispielsweise 1,5 bar, festgestellt, so wird die Radelektronik aktiviert und in den zweiten Betriebszustand versetzt, welcher die in Figur 2 gezeigten Unterzustände Mode 1a, 1b und 2 umfaßt. In diesem zweiten Betriebszustand wird der Druck in Zeitabständen t0, welche beispielsweise drei Sekunden betragen, gemessen und in Zeitabständen T0 ein Signal, welches eine Information über den Druck oder eine Druckänderung enthält, gesendet. Die Senderate T0 hängt dabei von der Fahrtgeschwindigkeit des Fahrzeugs ab. Bei Überschreiten einer vorgegebenen Mindestgeschwindigkeit, beispielsweise 25 km/h, werden die Zeitintervalle zwischen dem Senden von Druckdaten von beispielsweise 15 Minuten im Unterzustand Mode 1a auf 54 Sekunden im Unterzustand Mode 1b verkürzt. Bevorzugt dient ein auf die Rolldrehung ansprechender Schalter dazu, um festzustellen, ob eine vorgegebene Mindestgeschwindigkeit überschritten ist. Das Überschreiten der Mindestgeschwindigkeit führt zu einem Schließen des Schalters, was in Figur 2 mit RS = 1 dargestellt ist und damit zu einer schnelleren Senderate. Bei langsamer Fahrt oder bei Stillstand des Fahrzeuges ist der Schalter offen, was in Figur 2 mit RS = 0 dargestellt ist und zu einer langsameren Senderate führt.

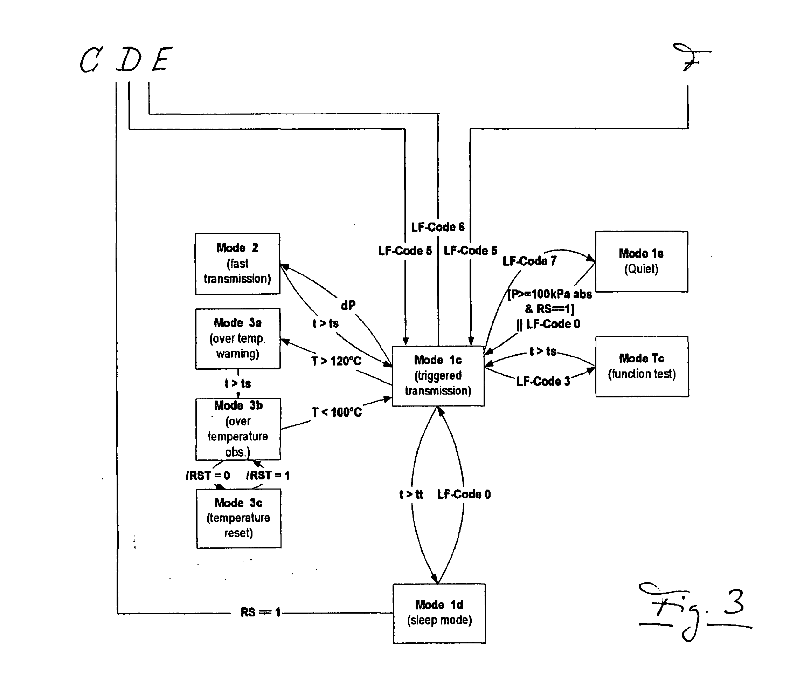

Empfängt die Radelektronik ein erstes Steuersignal, so geht sie in einen ersten Betriebszustand über, in welchem eine Information über den Druck oder eine Druckänderung auf ein Abfragesignal hin gesendet wird. Der erste Betriebszustand ist in Figur 3 als Mode 1c dargestellt und das erste Steuersignal kann das als LF Code 5 bezeichnete oder das als LF Code 0 bezeichnete Signal sein. Bleiben diese Signale aus, so fällt die Radelektronik nach einer vorgegebenen Zeitspanne tt, beispielsweise 1 bis 2 Minuten, wieder in den zweiten Betriebszustand, dessen zugehöriger Unterzustand in Figur 3 als Mode 1d bezeichnet ist, zurück. Auf diese Art und Weise ist auch bei einem beschädigten Abfragesender eine zuverlässige Reifendrucküberwachung gewährleistet. Bevorzugt wird das erste Steuersignal, mit welchem die Radelektronik in den ersten Betriebszustand versetzt wird, durch ein Entriegeln einer Fahrzeugtür ausgelöst. In der Zeitspanne, welche zwischen dem Entriegeln einer Fahrzeugtür und dem Losfahren des Fahrzeugs vergeht, kann bereits eine Abfrage von Druckmeßdaten erfolgen, so daß gegebenenfalls bereits beim Start des Fahrzeugs eine Warnung vor einem zu niedrigen Reifendruck vorliegt.

Wird von der Radelektronik ein schneller Druckabfall festgestellt, so wird sowohl im ersten als auch im zweiten Betriebszustand intern in kürzeren Zeitabständen gesendet und vorzugsweise auch die Meßrate erhöht. Das Feststellen eines schnellen Druckabfalls führt dabei nicht nur im zweiten Betriebszustand zu einer erhöhten Senderate, sondern auch im ersten Betriebszustand. Der entsprechende Unterzustand ist in den Figuren 2 und 3 als Mode 2 dargestellt.

Um den Energieverbrauch weiter senken zu können, kann die Radelektronik durch ein drittes externes Steuersignal, welches in den Figuren als LF Code 7 dargestellt ist, in einen dritten Betriebszustand versetzt werden, welcher in den Figuren 1 bis 3 als Mode 1e bezeichnet ist. In diesem dritten Betriebszustand finden keine Druckmessungen mehr statt und es wird auch nicht mehr gesendet. Aus diesem dritten Betriebszustand, welcher insbesondere für eine längere Lagerung der Radelektronik vorteilhaft ist, gelangt die Radelektronik durch ein externes Steuersignal, welches in den Figuren als LF Code 0 dargestellt ist, wieder in jenen Zustand zurück, welchen sie davor inne hatte, also in den Lagerzustand, oder den ersten oder in den zweiten Betriebszustand. Wurde die Radelektronik aus dem ersten oder zweiten Betriebszustand in den energiesparenden dritten Zustand versetzt, so gelangt sie bevorzugt auch durch Ansprechen des auf die Raddrehung ansprechenden Schalters in den zweiten Zustand, so daß in jedem Fall eine zuverlässige Überwachung des Reifendrucks gewährleistet ist.

Neben dem Reifendruck erfaßt die Radelektronik vorzugsweise ständig auch die Temperatur im Reifen und berücksichtigt diese bei der Auswertung der Druckmeßsignale. Da der Reifendruck naturgemäß mit ansteigender Temperatur ansteigt, kann auf diese Art und Weise eine unnötige Warnung vor einem zu hohen oder zu tiefen Reifendruck vermieden und die Qualität der Reifendrucküberwachung verbessert werden. Oberhalb einer bestimmten materialbedingten Schwellentemperatur ist ein störungsfreier Betrieb der Radelektronik, welche üblicherweise einen ASIC oder einen Mikroprozessor enthält, nicht mehr gewährleistet. Aus diesem Grund schaltet sich die Radelektronik zweckmäßigerweise sowohl im ersten wie auch im zweiten Betriebszustand bei Überschreiten einer vorgegebenen Schwellentemperatur von beispielsweise 120°C ab. Die zugehörigen Zustände sind in den Figuren 2 und 3 als Mode 3a, 3b und 3c dargestellt. Bei Unterschreiten einer weiteren Schwellentemperatur von beispielsweise 100°C, schaltet sich die Radelektronik z.B. mittels eines in der Radelektronik vorgesehenen Kaltleiters wieder ein. Um ein unnötig häufiges Hin- und Herschalten durch geringe Temperaturänderungen zu vermeiden, ist es zweckmäßig, die zweite Schwellentemperatur etwas geringer zu wählen als die erste.

Durch ein viertes Steuersignal, welches in den Figuren 1 bis 3 als LF Code 3 bezeichnet ist, kann die Radelektronik in einen Testzustand Mode Ic versetzt werden. In diesem Zustand können für Reparatur- und Wartungsarbeiten sowie vor einem Einbau zur Qualitätskontrolle Funktiontests durchgeführt werden.

Ein wesentlicher Vorteil einer mit dem anhand der Figuren 1 bis 3 beschriebenen Verfahren betriebenen Radelektronik ist nun, daß sich zwar die Vorteile eines Abfragesenders für eine besonders komfortable und energiesparende Reifendrucküberwachung nutzen lassen, jedoch auch bei einem Fahrzeug ohne Abfragesender eine zuverlässige Reifendrucküberwachung möglich ist. Sowohl für Fahrzeuge mit Abfragesender als auch für Fahrzeuge ohne Abfragesender genügt es daher, eine einzige Ausführungsform einer Radelektronik zu fertigen und auf Lager zu halten.

Wie bereits vorstehend beschrieben, befindet sich eine Radelektronik vor ihrer erstmaligen Inbetriebnahme zunächst einmal im Lagerzustand (Mode 0a). Aus dem Lagerzustand wird die Radelektronik aktiviert, sobald ein Anstieg des Drukkes über einen vorgegebenen Schwellenwert, welcher in Figur 1 beispielsweise mit 1,5 bar angegeben ist, festgestellt wird. Die Radelektronik mißt daher im Lagerzustand in periodisch wiederkehrenden Zeitabständen den Druck. Zwar unterbleibt im Lagerzustand jeglicher Sendebetrieb, jedoch belastet auch der mit den periodisch durchzuführenden Druckmessungen verbundene Energieverbrauch - insbesondere bei einer längeren Lagerzeit - die Batterie der Radelektronik. Um die Radelektronik trotzdem über längere Zeit lagern zu können, ohne die Lebensdauer der Batterie im anschließenden Betrieb zu verkürzen, ist vorgesehen, daß sich die Radelektronik aus dem Lagerzustand durch ein externes Steuersignal, welches in Figur 1 als LF-Code 7 bezeichnet ist, in einen dritten Betriebszustand (Mode 1e) versetzen läßt, in welchem jeglicher Sendebetrieb unterbleibt und auch nicht mehr gemessen wird. Das externe Steuersignal, durch welches die Radelektronik in diesen energiesparenden dritten Betriebszustand versetzbar ist, läßt sich beispielsweise durch ein Handgerät aussenden.

Wird nun eine sich in dem energiesparenden dritten Betriebszustand befindliche Radelektronik in einem Reifen mit Druck beaufschlagt, so wird sie, da in diesem Betriebszustand keine Druckmessungen mehr stattfinden, dadurch noch nicht aktiviert. Dazu muß die Radelektronik vielmehr zunächst wieder in den Lagerzustand zurückversetzt werden, in welchem Druckmessungen stattfinden. Dies kann beispielsweise mittels eines Handgerätes durch Aussenden eines entsprechenden Steuersignals geschehen, welches in Figur 1 mit LF-Code 7 bezeichnet ist. Verläßt die Radelektronik den beschriebenen dritten Betriebszustand, so kehrt sie stets in jenen Zustand zurück, welchen sie inne hatte, bevor sie in den dritten Zustand versetzt wurde. Wurde die Radelektronik also aus dem Lagerzustand in den dritten Betriebszustand versetzt, so kann sie aus dem dritten Betriebszustand lediglich in den Lagerzustand versetzt werden.

An sich sollte eine Radelektronik, bevor sie in einem Reifen an ein Fahrzeug montiert wird, aktiviert werden. Trotzdem kann es natürlich vorkommen, daß eine Radelektronik, welche aus dem Lagerzustand in den dritten Betriebszustand versetzt wurde, in diesem Zustand an ein Fahrzeug montiert wird. Um auch in diesem Fall eine Überwachung des Reifendrucks zu ermöglichen, verfügt die Radelektronik über einen Rollschalter, welcher bei Überschreiten einer vorgegebenen Mindestgeschwindigkeit die Radelektronik aus dem dritten Betriebszustand in den vorhergehenden Betriebszustand, also beispielsweise den Lagerzustand, zurückversetzt. Mißt die Radelektronik daraufhin im Lagerzustand einen oberhalb des vorgegebenen Schwellenwertes liegenden Druck, so geht sie in den Unterzustand 1 a des zweiten Betriebszustandes über. Die Radelektronik geht dabei allerdings nicht direkt vom Lagerzustand in den zweiten Betriebszustand über, sondern durchläuft dazwischen einen Zwischenzustand Mode 0b. In diesem Zwischenzustand können Funktionstests durchgeführt werden. Darüberhinaus dient der Zwischenzustand Mode 0b dazu, ein Aktivieren der Radelektronik aufgrund eines einzigen fehlerhaften Meßergebnisses zu verhindern. Zu diesem Zweck wird im Zwischenzustand Mode 0b der Druck mehrmals gemessen. Nur wenn dabei festgestellt wird, daß der vorgegebene Schwellenwert des Drucks für eine vorgegebene Zeitspanne überschritten wird, geht die Radelektronik aus dem Zwischenzustand Mode 0b in den Unterzustand Mode 1a des zweiten Betriebszustandes über, andernfalls kehrt sie in den Lagerzustand zurück.

Während also bei einem Fahrzeug ohne Abfragesender der in der Radelektronik vorgesehene Rollschalter erforderlich ist, um in jedem Fall eine Überwachung des Reifendrucks zu ermöglichen, ist dies bei einem Fahrzeug, welches mit einem Abfragesender ausgerüstet ist, nicht so.

Der Abfragesender wird nämlich durch das Entriegeln einer Fahrzeugtür veranlaßt, ein erstes Steuersignal auszusenden. Unter einem ersten Steuersignal wird dabei jedes Steuersignal verstanden, welches die Radelektronik direkt oder indirekt in den ersten Betriebszustand versetzt. Bei dem in Figuren 1 bis 3 gezeigten Ausführungsbeispiel kann ein erstes Steuersignal also aus den mit LF-Code 0 oder LF-Code 5 bezeichneten Steuersignalen bestehen oder eines oder auch beide dieser Steuersignale enthalten. Das durch das Entriegeln einer Fahrzeugtür ausgelöste erste Steuersignal enthält im beschriebenen Ausführungsbeispiel die mit LF-Code 0 und LF-Code 5 bezeichneten Signale. Falls sich die Radelektronik beim Entriegeln einer Fahrzeugtür im dritten Betriebszustand befand, so wird sie also durch das erste Steuersignal in den vorhergehenden Zustand, im beschriebenen Fall also den Lagerzustand, versetzt. Falls der Reifendruck nun oberhalb des vorgegebenen Schwellenwertes liegt, so gelangt die Radelektronik dann über den Zwischenzustand Mode 0b und den Unterzustand Mode 1a des zweiten Betriebszustandes durch den mit LF-Code 5 bezeichneten Teil des ersten Steuersignals in den Unterzustand 1c des ersten Betriebszustandes.

Bevorzugt wird nun durch das Entriegeln einer Fahrzeugtür nicht nur ein einmaliges Senden eines ersten Steuersignales, sondern ein mehrmaliges Senden veranlaßt. Auf diese Art und Weise wird die Zuverlässigkeit des Systems insgesamt erhöht. Bevorzugt ist dabei insbesondere, daß das erste Steuersignal auch eine in Figur 1 mit LF-Code 8 bezeichnete Sequenz enthält. Empfängt die Radelektronik, welche sich im Lagerzustand befindet, eine solche Sequenz, so geht sie unabhängig vom gemessenen Druck in den Unterzustand Mode 1 a des zweiten Betriebszustandes über. Durch den in Figur 3 mit LF-Code 5 bezeichneten Teil des ersten Steuersignals geht die Radelektronik dann anschließend in den ersten Betriebszustand über und sendet auf ein Abfragesignal hin Daten über den Reifendruck oder eine Reifendruckänderung.

Der Vorteil eines Abfragesenders liegt unter anderem insbesondere darin, daß auf diese Art und Weise bereits in der Zeitspanne, welche zwischen dem Entriegeln einer Fahrzeugtür und dem Losfahren des Fahrzeuges vergeht, eine Abfrage von Druckmeßdaten erfolgen und gegebenenfalls bereits beim Start des Fahrzeuges eine Warnung vor einem zu niedrigen Reifendruck gegeben werden kann.

Bei einer anschließenden Fahrt werden die jeweils in den Reifen des Fahrzeuges befindlichen Radelektroniken in regelmäßigen Zeitabständen mittels Abfragesignalen zum Aussenden einer Information über den Druck oder eine Druckänderung veranlaßt. Bevorzugt werden die Abfragesignale bei schneller Fahrt in kürzeren Zeitabständen ausgesandt, als bei langsamer Fahrt. Auf diese Art und Weise wird bei schneller Fahrt in kürzeren Zeitabständen eine aktuelle Information über den Druck oder die Druckänderung zur Verfügung gestellt. Bei hoher Geschwindigkeit ist nämlich ein Druckverlust in einem Reifen viel gefährlicher als bei niedrigerer Geschwindigkeit. Bei langsamer Fahrt können daher die Abfrageintervalle und dementsprechend auch die Sendeintervalle wesentlich länger sein, als bei schneller Fahrt, so daß sich auf diese Art und Weise Sendeenergie einsparen läßt.

Wird von der Radelektronik bei zwei aufeinanderfolgenden Messungen festgestellt, daß sich der Reifendruck um mehr als einen vorgegebenen Wert vermindert hat, also ein schneller Druckabfall festgestellt, so wird die interne Meßrate erhöht. Beispielsweise wird dann der Druck nicht mehr alle drei Sekunden gemessen, sondern bereits alle 0,3 Sekunden. Bestätigt sich dabei der schnelle Druckabfall, so sendet die Radelektronik ein Signal über den Druck oder die Druckänderung auch im ersten Betriebszustand, ohne erst auf ein Abfragesignal zu warten. Ein schneller Druckabfall ist nämlich bei der Fahrt außerordentlich gefährlich und soll daher einen Fahrer des Fahrzeuges zum frühestmöglichen Zeitpunkt signalisiert werden.

Wird ein mit einem Abfragesender ausgerüstetes Fahrzeug geparkt, so werden keine Abfragesignale mehr ausgesandt. Empfängt die Radelektronik keine Abfragesignale mehr, so geht sie nach einer vorgegebenen Zeitspanne tt, beispielsweise ein bis zwei Minuten, in den Unterzustand Mode 1d des zweiten Betriebszustandes über. An sich ist bei einem geparkten Fahrzeug, welches mit einem Abfragesender ausgerüstet ist, kein Meß- und Sendebetrieb erforderlich, da vor einem erneuten Fahrtbeginn der Abfragesender wieder betätigt wird, beispielsweise um das von einem Entriegeln der Fahrzeugtür ausgelöste erste Steuersignal auszusenden. An sich könnte die Radelektronik daher beim Ausbleiben von Abfragesignalen aus dem ersten Betriebszustand Mode 1c auch in den dritten Betriebszustand übergehen, in welchem nicht mehr gemessen und nicht mehr gesendet wird. Um eine möglichst große Zuverlässigkeit der Reifendrucküberwachung zu erreichen, mißt die Radelektronik aber auch bei geparktem Fahrzeug, also im Unterzustand Mode 1d des zweiten Betriebszustandes, in Zeitabständen t0 den Druck und sendet eine Information über den Druck oder eine Druckänderung in Zeitabständen T0.

Bei einem Fahrzeug ohne Abfragesender gelangt die Radelektronik, wie vorstehend beschrieben, aus dem Lagerzustand in den Unterzustand Mode 1a des zweiten Betriebszustandes. Dieser Betriebszustand ähnelt weitgehend dem Unterzustand Mode 1d des zweiten Betriebszustandes, da auch im Unterzustand Mode 1a des zweiten Betriebszustandes der Reifendruck in Zeitabständen t0 gemessen und in Zeitabständen T0 ein Signal, welches eine Information über den Druck oder eine Druckänderung enthält, gesendet wird. Den Unterzustand Mode 1a des zweiten Betriebszustandes nimmt die Radelektronik eines Fahrzeuges ohne Abfragesender im geparkten Zustand und bei langsamer Fahrt ein. Bei Überschreiten einer vorgegebenen Mindestgeschwindigkeit von beispielsweise 25 km/h, wird die Radelektronik durch ein Ansprechen des Rollschalters in den Unterzustand 1b des zweiten Betriebszustandes versetzt. Im Unterzustand 1b des zweiten Betriebszustandes sind die Zeitintervalle zwischen dem Senden von Druckdaten von beispielsweise 15 Minuten im Unterzustand Mode 1a auf 54 Sekunden verkürzt. Vorteilhaft kann auf diese Art und Weise auch bei einem nicht vorhandenen oder nicht funktionierenden Abfragesender die Senderate an die Fahrtgeschwindigkeit angepaßt werden, so daß sich Sendeenergie ansparen läßt. Stellt die Radelektronik im zweiten Betriebszustand einen schnellen Druckverlust fest, so werden die Meßrate und die Senderate erhöht.

Wurde ein Reifen mit einer Radelektronik von einem Fahrzeug, welches mit einem Abfragesender ausgerüstet ist, an ein Fahrzeug ohne Abfragesender gewechselt, so nimmt die Radelektronik zunächst den Unterzustand 1d des zweiten Betriebszustandes ein. Sobald nach Fahrtbeginn der Rollschalter das Überschreiten der vorgegebenen Mindestgeschwindigkeit feststellt, wechselt die Radelektronik dann jedoch in den Unterzustand Mode 1a des zweiten Betriebszustandes und von dort gegebenenfalls in den Unterzustand Mode 1b des zweiten Betriebszustandes. Auf diese Art und Weise ist also selbst bei einem Reifenwechsel oder einem plötzlichen Defekt des Abfragesenders eine lückenlose Überwachung des Reifendrucks möglich.

## Patentansprüche

1. Verfahren zum Betreiben einer Einrichtung zum Überwachen und drahtlosen Signalisieren eines Drucks oder einer Druckänderung in Luftreifen von Rädem an Fahrzeugen, nachfolgend Radelektronik genannt, in welcher der im Luftreifen herrschende Druck unter Bildung von elektrischen Druckmeßsignalen gemessen und ein Informationssignal über den Druck oder eine Druckänderung gesendet wird, welches dazu bestimmt ist, von einem im oder am Fahrzeug angeordneten Empfangsgerät empfangen zu werden,
wobei die Radelektronik durch ein drahtlos von außerhalb der Radelektronik übermitteltes erstes Steuersignal in einem ersten Betriebszustand versetzt wird, in welchem der Druck oder eine Druckänderung gemessen und als Folge des Empfangs eines außerhalb der Radelektronik erzeugten und ihr drahtlos übermittelten Abfragesignales gesendet wird, und **dadurch gekennzeichnet, daß** die Radelektronik sich selbst in einen zweiten Betriebszustand versetzt, wenn die Radelektronik nicht innerhalb einer vorgegebenen Zeitspanne nach dem Empfang eines Abfragesignals ein weiteres Abfragesignal empfängt, wobei in dem zweiten Betriebszustand der Druck oder eine Druckänderung wiederholt gemessen und mit einer fest vorgegebenen oder veränderlichen Senderate gesendet wird, welche für diesen zweiten Betriebszustand in der Radelektronik gebildet wird.

2. Verfahren nach Anspruch 1, **dadurch gekennzeichnet, daß** in dem ersten Betriebszustand der Druck oder die Druckänderung nach einem internen Programm wiederholt gemessen wird.

3. Verfahren nach Anspruch 2, **dadurch gekennzeichnet, daß** die Messungen im ersten Betriebszustand unabhängig von den Abfragesignalen durchgeführt werden.

4. Verfahren nach einem der vorstehenden Ansprüche, **dadurch gekennzeichnet, daß** für den ersten und den zweiten Betriebszustand übereinstimmende Meßraten benutzt werden.

5. Verfahren nach einem der vorstehenden Ansprüche, **dadurch gekennzeichnet, daß** das erste Steuersignal vom Vorgang des Entriegelns des Fahrzeugs abgeleitet wird.

6. Verfahren nach Anspruch 5, **dadurch gekennzeichnet, daß** als erstes Steuersignal das Signal eines Funkschlüssels oder ein davon abgeleitetes Signal benutzt wird.

7. Verfahren nach einem der vorstehenden Ansprüche, **dadurch gekennzeichnet, daß** die Radelektronik auch durch ein vom Ausschalten des Motors oder vom Verriegeln des Fahrzeugs abgeleitetes zweites Steuersignal in den zweiten Betriebszustand versetzt wird.

8. Verfahren nach einem der vorstehenden Ansprüche, **dadurch gekennzeichnet, daß** in der Radelektronik ein ursächlich von der Raddrehung abgeleitetes elektrisches Signal gewonnen und im zweiten Betriebszustand zur Steuerung der Senderate benutzt wird.

9. Verfahren nach Anspruch 8, **dadurch gekennzeichnet, daß** die Radelektronik im zweiten Betriebszustand ab Erreichen einer Mindestgeschwindigkeit des Fahrzeugs in Zeitabständen T0 sendet und bei Unterschreiten einer Mindestgeschwindigkeit oder bei Stillstand des Fahrzeugs in Zeitabständen T1 > T0 sendet.

10. Verfahren nach Anspruch 8 und 9, **dadurch gekennzeichnet, daß** die von der Raddrehung abgeleiteten elektrischen Signale zum Verändern der Zeitabstände T0 benutzt werden.

11. Verfahren nach einem der vorstehenden Ansprüche, **dadurch gekennzeichnet, daß** die Druck- bzw. Druckänderungssignale in der Radelektronik ausgewertet werden und im zweiten Betriebszustand die Senderate in Abhängigkeit von der Geschwindigkeit einer Druckänderung eingestellt wird.

12. Verfahren nach Anspruch 11, **dadurch gekennzeichnet, daß** bei Überschreiten einer Schwelle der Geschwindigkeit der Druckänderung die Senderate erhöht wird.

13. Verfahren nach Anspruch 11 oder 12, **dadurch gekennzeichnet, daß** die Radelektronik im ersten Betriebszustand bei Überschreiten eines vorgegebenen Schwellenwertes der Geschwindigkeit einer Druckänderung sendet ohne auf ein Abfragesignal zu warten.

14. Verfahren nach einem der vorstehenden Ansprüche in Verbindung mit Anspruch 9, **dadurch gekennzeichnet, daß** die Radelektronik durch ein drittes außerhalb der Radelektronik erzeugtes und drahtlos übermitteltes Steuersignal in einen dritten Betriebszustand versetzt wird, in welchem sie überhaupt nicht mehr sendet, bis sie den dritten Betriebszustand entweder durch Empfang des ersten Steuersignals oder durch Erreichen der Mindestgeschwindigkeit des Fahrzeuges wieder verläßt und in den ersten oder zweiten Betiebszustand übergeht.

15. Verfahren nach Anspruch 14, **dadurch gekennzeichnet, daß** in dem dritten Betriebszustand kein Druck und auch keine Druckänderung gemessen wird.

## Claims

1. Method for operating a device for monitoring and wireless signalling a pressure or a pressure change in pneumatic tires of wheels on vehicles, the device being hereinafter referred to as wheel electronics, wherein the pressure prevailing in the pneumatic tire is measured and electric pressure signals are derived from such measurements, and an information signal containing information on the pressure or on a pressure change is transmitted, the information signal being intended to be received by a receiver provided in or on the vehicle,
the wheel electronics being set by a first control signal, which is transmitted in wireless fashion from outside the wheel electronics, to a first mode of operation in which the prevailing pressure or a pressure change is measured and signalled in response to the receipt of an interrogation signal generated outside the wheel electronics and transmitted in wireless fashion,
and **characterized in that**, if the wheel electronics do not receive another interrogation signal within a predetermined period of time after receipt of an interrogation signal, the wheel electronics adopting itself a second mode of operation in which the pressure or a pressure change is measured repeatedly and is transmitted at a transmission rate which is firmly preset or is variable and which is established in the wheel electronics for that second mode of operation.

2. The method as defined in Claim 1, **characterised in that** in the first mode of operation the pressure or the pressure change is measured repeatedly based on an internal program.

3. The method as defined in Claim 2, **characterised in that** in the first mode of operation the measurements are carried out independently of the interrogation signals.

4. The method as defined in any of the preceding claims, **characterised in that** the same measuring rates are used for the first and second modes of operation.

5. The method as defined in any of the preceding claims, **characterised in that** the first control signal is derived from an action of unlocking the vehicle.

6. The method as defined in Claim 5, **characterised in that** a signal of a radio key, or a signal derived therefrom, is taken as the first control signal.

7. The method as defined in any of the preceding claims, **characterised in that** the wheel electronics are set to the second mode of operation also by a second control signal derived from switching off the motor or from locking the vehicle.

8. The method as defined in any of the preceding claims, **characterised in that** an electric signal is derived from rotation of the wheel and the signal so obtained in the wheel electronics is taken for controlling the transmission rate in the second mode of operation.

9. The method as defined in Claim 8, **characterised in that** in the second mode of operation the wheel electronics send out signals at time intervals T0 when a minimum speed of the vehicle has been reached, and when the speed drops below a minimum speed or when the vehicle is not moving the wheel electronics send out signals at time intervals T1>T0.

10. The method as defined in Claims 8 and 9, **characterised in that** the electric signals derived from rotation of the wheel are taken to vary the time intervals T0.

11. The method as defined in any of the preceding claims **characterised in that** the signals indicating a pressure or a pressure change are evaluated in the wheel electronics and that in the second mode of operation the transmission rate is adjusted in response to the speed of a pressure change.

12. The method as defined in Claim 11, **characterised in that** the transmission rate is increased when the speed at which the pressure changes exceeds a threshold value.

13. The method as defined in Claim 11 or 12, **characterised in that** in the first mode of operation the wheel electronics do transmit a signal when the speed of a pressure change exceeds a given threshold value, without waiting for an interrogation signal.

14. The method as defined in any of the preceding claims, in combination with Claim 9, **characterised in that** the wheel electronics is set, by a third control signal generated outside the wheel electronics and transmitted to it in wireless fashion, to a third mode of operation in which it does not transmit signals at all until it is caused to leave the third mode of operation again and to return to the first or the second mode of operation by receiving of a first control signal or by reaching the minimum speed of the vehicle.

15. The method as defined in Claim 14, **characterised in that** neither a pressure nor a pressure change is measured in the third mode of operation.

## Revendications

1. Procédé pour le fonctionnement d'un mécanisme pour la surveillance et la signalisation sans fil d'une pression ou d'une modification de pression dans des bandages pneumatiques de roues montées sur des véhicules automobiles, que l'on désigne ci-après par le terme « électronique de roue », dans lequel la pression régnant dans le bandage pneumatique est mesurée en formant des signaux électriques de mesure de pression, un signal d'information concernant la pression ou une modification de pression étant envoyé, ledit signal étant destiné à être reçu par un appareil de réception monté dans ou sur le véhicule, l'électronique de roue pouvant être amenée dans un premier état de fonctionnement à l'aide d'un premier signal de commande transmis sans fil depuis l'extérieur de l'électronique de roue, état dans lequel la pression ou une modification de la pression est mesurée et envoyée suite à la réception d'un signal d'interrogation généré à; l'extérieur de l'électronique de roue et qui lui a été transmis sans fil, et **caractérisé en ce que** l'électronique de roue se place automatiquement dans un deuxième état de fonctionnement lorsque l'électronique de roue ne reçoit pas un signal d'interrogation supplémentaire au sein d'un laps de temps prédéfini après la réception d'un signal d'interrogation, la pression ou une modification de pression étant soumise à une nouvelle mesure dans le deuxième état de fonctionnement et étant envoyée avec une vitesse d'émission fixe prédéterminée ou variable qui est formée dans l'électronique de roue pour ce deuxième état de fonctionnement.

2. Procédé selon la revendication 1, **caractérisé en ce que**, dans le premier état de fonctionnement, la pression ou la modification est mesurée de manière répétée conformément à un programme interne.

3. Procédé selon la revendication 2, **caractérisé en ce que** les mesures dans le premier état de fonctionnement sont effectuées indépendamment des signaux d'interrogation.

4. Procédé selon l'une quelconque des revendications précédentes, **caractérisé en ce qu'**on utilise, pour le premier et pour le deuxième état de fonctionnement, des vitesses de mesure concordantes.

5. Procédé selon l'une quelconque des revendications précédentes, **caractérisé en ce que** le premier signal de commande dérive du processus de déverrouillage du véhicule.

6. Procédé selon la revendication 5, **caractérisé en ce qu'**on utilise, à titre de premier signal de commande, le signal d'une clef radioélectrique ou un signal qui en dérive.

7. Procédé selon l'une quelconque des revendications précédentes, **caractérisé en ce que** l'électronique de roue passe également au deuxième état de fonctionnement sous l'influence d'un deuxième signal de commande qui dérive de l'arrêt du moteur ou du verrouillage du véhicule.

8. Procédé selon l'une quelconque des revendications précédentes, **caractérisé en ce que** l'on obtient dans l'électronique de roue un signal électrique qui dérive directement de la rotation de la roue, ledit signal électrique étant utilisé dans le deuxième état de fonctionnement pour le réglage de la vitesse d'émission.

9. Procédé selon la revendication 8, **caractérisé en ce que** l'électronique de roue émet, dans le deuxième état de fonctionnement, après que le véhicule a atteint une vitesse minimale, par intervalles de temps T0 et lors du dépassement d'une vitesse minimale ou lors de l'arrêt du véhicule, par intervalles de temps T1 > T0.

10. Procédé selon les revendications 8 et 9,
**caractérisé en ce que** les signaux électriques qui dérivent de la rotation de la roue sont utilisés pour la modification des intervalles de temps T0.

11. Procédé selon l'une quelconque des revendications précédentes, **caractérisé en ce que** les signaux de pression, respectivement de modification de pression sont évalués dans l'électronique de roue et, dans le deuxième état de fonctionnement, la vitesse d'émission est réglée en fonction de la vitesse d'une modification de pression.

12. Procédé selon la revendication 11, **caractérisé en ce que**, lors du dépassement d'un seuil de la vitesse de la modification de pression, la vitesse d'émission est augmentée.

13. Procédé selon la revendication 11 ou 12, **caractérisé en ce que** l'électronique de roue émet, dans le premier état de fonctionnement, lors du dépassement d'une valeur seuil prédéfinie de la vitesse d'une modification de pression, sans attendre un signal d'interrogation.

14. Procédé selon l'une quelconque des revendications précédentes, en liaison avec la revendication 9, **caractérisé en ce que** l'électronique de roue est placée dans un troisième état de fonctionnement, via un troisième signal de commande généré à l'extérieur de l'électronique de roue et transmis sans fil, signal dans lequel l'électronique n'émet plus du tout jusqu'à ce qu'elle quitte le troisième état de fonctionnement, soit via la réception du premier signal de commande, soit après que le véhicule a atteint une nouvelle fois sa vitesse minimale, pour passer dans le premier ou dans le deuxième état de fonctionnement.

15. Procédé selon la revendication 14, **caractérisé en ce que**, dans le troisième état de fonctionnement, on ne mesure aucune pression, ni aucune modification de pression.
